# DEMANDE DE BREVET EUROPEEN

(11) **EP 3 838 549 A1**
(43) Date de publication de la demande: **23.06.2021**
(21) Numéro de dépôt: 20214217.0
(22) Date de dépôt: 15.12.2020
(51) Int. Cl.: B29C 45/76, B29C 45/77, B29C 45/78

(54) **PROCÉDÉ DE MOULAGE D'UNE PIÈCE PAR INJECTION PLASTIQUE ET MOULE INSTRUMENTÉ DESTINÉ À METTRE EN OEUVRE UN TEL PROCÉDÉ**

(30) Priorité: 16.12.2019 FR 1914452
(71) Demandeur: Schneider Electric Industries SAS, 92500 Rueil-Malmaison (FR)
(72) Inventeur: OUBAHMANE, Mehdi, 38000 Grenoble (FR); SALMON, Benjamin, 38000 Grenoble (FR)
(74) Mandataire: Lavoix

(57) **Abrégé**

Ce procédé de moulage d'une pièce par injection plastique dans un moule comprend plusieurs étapes consistant. Une première étape a) consiste à initialiser (100) un cycle de moulage. Dans une deuxième étape, des grandeurs caractéristiques de la qualité de la pièce sont mesurées ou calculées (102), au cours du cycle de moulage, à l'aide de capteurs intégrés au moule. Ensuite, dans une étape c), les grandeurs caractéristiques mesurées ou calculées à l'étape b) sont comparées à des valeurs de référence et, dans une étape d), en fonction de la comparaison effectuée à l'étape c), la pièce est déclarée conforme (134) ou non conforme (132).

## Description

La présente invention concerne un procédé de moulage d'une pièce par injection plastique. La présente invention concerne également un moule instrumenté destiné à mettre en œuvre un tel procédé.

Dans des procédés de moulage par injection plastique dans un moule, il est connu de mesurer des grandeurs caractéristiques de la qualité de certaines pièces moulées pour évaluer leur conformité.

Pour ce faire, il est connu de disposer dans le moule des capteurs amovibles servant à mesurer les grandeurs caractéristiques de la qualité de la pièce moulée. Cependant, ce procédé est fastidieux. A chaque changement d'outillage, il est nécessaire de replacer les capteurs correctement, ce qui nuit à la précision des mesures. En effet, le remplacement des capteurs dans le moule implique une variation dans leur position plus ou moins importante due, entre autre, aux jeux et tolérances de positionnement de ces capteurs.

Il est connu de EP 0 317 992 A2 d'équiper d'éjecteurs la partie mobile d'un moule et d'attacher des capteurs à l'extrémité de ces éjecteurs pour mesurer des grandeurs caractéristiques de la qualité de la pièce moulée. Cependant, ce positionnement des capteurs est peu précis. En effet, les capteurs étant attachés à des pièces mobiles, leur position par rapport au moule peut varier de manière importante entre chaque pièce fabriquée.

C'est à cet inconvénient qu'entend plus particulièrement remédier l'invention, en proposant un procédé de moulage permettant une détection plus simple et plus précise de la conformité des pièces moulées.

A cet effet, l'invention concerne un procédé de moulage d'une pièce par injection plastique dans un moule. Selon l'invention, ce procédé comprend plusieurs étapes. Une première étape a) consiste à initialiser un cycle de moulage. Dans une deuxième étape b), des grandeurs caractéristiques de la qualité de la pièce sont mesurées ou calculées, au cours du cycle de moulage, à l'aide de capteurs intégrés au moule. Ensuite, dans une étape c), les grandeurs caractéristiques mesurées ou calculées à l'étape b) sont comparées à des valeurs de référence et, dans une étape d), en fonction de la comparaison effectuée à l'étape c), la pièce est déclarée conforme ou non conforme.

Grâce à l'invention, les capteurs intégrés au moule permettent de faciliter la mise en œuvre du procédé. En effet, lors de l'initialisation du procédé de moulage, il n'est plus nécessaire de mettre en position les capteurs, le procédé est donc plus rapide à mettre en œuvre et plus précis. De plus, les capteurs étant intégrés au moule, ils restent durant toute la vie du moule au même endroit, ce qui permet de s'affranchir des jeux et tolérances de placement inhérents aux capteurs amovibles et permet de pouvoir comparer de manière précise les données mesurées à chaque utilisation du moule.

Selon des aspects avantageux mais non obligatoires de l'invention, un tel procédé comporte une ou plusieurs des caractéristiques suivantes, prise selon toute combinaison techniquement admissible :
- L'étape d) comprend des sous-étapes. Une première sous-étape e) consiste à compter le nombre de grandeurs caractéristiques qui sont hors d'un intervalle de tolérance centré sur des valeurs de référence et stocker cette valeur dans un compteur. Une deuxième sous-étape f) consiste à comparer le compteur à une valeur seuil. Dans une sous-étape g), si le compteur est inférieur ou égal à la valeur seuil, la pièce est déclarée conforme et dans une sous-étape h), si le compteur est strictement supérieur à la valeur seuil, la pièce est déclarée non conforme.
- L'étape e) comprend des routines consistant à, tout d'abord i), sélectionner ou calculer des grandeurs caractéristiques parmi les valeurs mesurées ou calculées à l'étape b), puis, dans une routine j), initialiser le compteur, puis, dans une routine k), comparer chacun au moins un des points caractéristiques mesurés ou calculés à une valeur de référence correspondante et, dans une routine I), pour chaque point caractéristique, si la différence calculée à la routine k) est supérieure à un intervalle de tolérance prédéfini, incrémenter le compteur de un.
- Après l'étape I), dans une étape m) les points caractéristiques, les valeurs de références, les différences calculées et la valeur du compteur sont stockées dans une mémoire appartenant au moule.
- Les grandeurs caractéristiques comprennent des pressions et des températures ou des résultats de calculs, notamment des intégrales de valeurs.

L'invention concerne également un moule instrumenté destiné à mettre en œuvre le procédé décrit ci-dessus. Selon l'invention, ce moule comprend des capteurs qui sont solidaires d'au moins un châssis du moule.

Ce moule induit les mêmes avantages que ceux mentionnés ci-dessus au sujet du procédé de l'invention.

Selon des aspects avantageux mais non obligatoires de l'invention, un tel moule comporte une ou plusieurs des caractéristiques suivantes, prise selon toute combinaison techniquement admissible :
- Le moule comprend au moins un capteur de pression et un capteur de température et au moins une empreinte est équipée d'un capteur de pression et d'un capteur de température.
- Le moule comprend au moins une empreinte, chaque empreinte comprenant au maximum un capteur de température et un capteur de pression.
- Chaque empreinte comprend un point d'injection, chaque capteur de pression est situé dans l'empreinte correspondante, au plus proche du point d'injection et chaque capteur de température est situé dans l'empreinte correspondante le plus loin possible du point d'injection.

L'invention sera mieux comprise et d'autres avantages de celle-ci apparaîtront plus clairement à la lumière de la description qui va suivre, d'un procédé de moulage d'une pièce par injection plastique dans un moule et d'un mode de réalisation d'un moule instrumenté, donnée uniquement à titre d'exemple et faite en référence aux dessins, dans lesquels :
[Fig. 1] la figure 1 est une vue schématique d'une installation de moulage comprenant un moule instrumenté selon l'invention ;

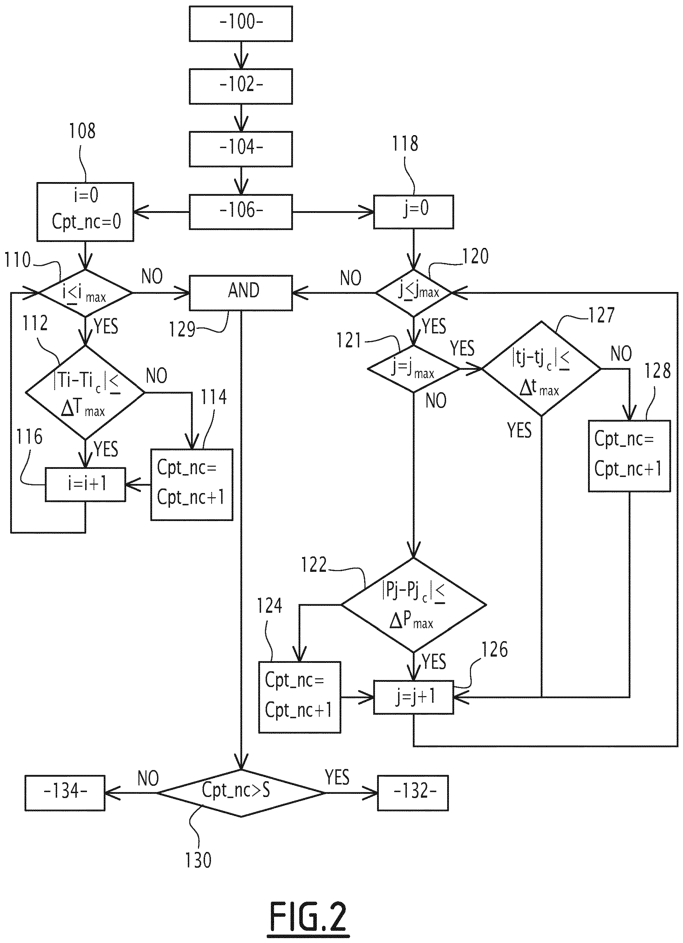

[Fig. 2] la figure 2 est un schéma blocs d'un procédé de moulage selon l'invention ; et
[Fig. 3] la figure 3 est un ensemble de courbes caractéristiques d'un cycle de moulage effectué selon le procédé de la figure 2.

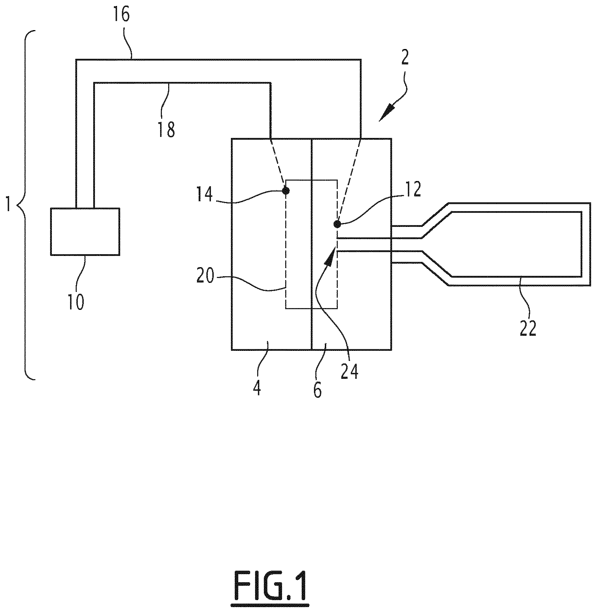

Un moule instrumenté 2 est représenté schématiquement sur la figure 1, au sein d'une installation 1 de moulage par injection. Ce moule 2 comprend un premier châssis 4 et un second châssis 6. Le moule 2 comprend également une unité électronique de traitement 10, un capteur de pression 12 et un capteur de température 14. Le capteur de pression est intégré au second châssis 6 et transmet des informations à l'unité de traitement 10 par le biais d'une liaison 16, qui peut être une liaison électrique comme sur la figure, ou une liaison sans fil. Le capteur de température 14 est intégré au premier châssis 4 du moule 2 et transmet des informations à l'unité de traitement 10 par le biais d'une liaison 18, qui peut également être une liaison électrique comme sur la figure, ou une liaison sans fil. Préférentiellement, pour ne pas fragiliser la liaison 18, dans le cas où c'est une liaison filaire, l'unité de traitement 10 est placée au plus proche des capteurs 12 et 14.

Le moule 2 définit une empreinte 20, ménagée entre les châssis 4 et 6 lorsque le moule 2 est fermé et qui est représentée en pointillés sur la figure 1, pour former une pièce moulée par injection plastique. Un injecteur 22 connu en soi est associé au moule 2 au sein de l'installation 1. L'injecteur 22 est prévu pour injecter une matière plastique dans l'empreinte 20 en passant par un point d'injection 24 définit dans le moule 2. En d'autres termes, l'injecteur 22 et l'empreinte 20 communiquent grâce au point d'injection 24.

L'empreinte 20 forme une cavité dans le moule 2 reliée au point d'injection 24. Afin de mesurer correctement des grandeurs caractéristiques de la qualité de la pièce à mouler, le capteur de pression 12 est situé dans l'empreinte 20 au plus proche du point d'injection 24 pour pouvoir mesurer la pression du produit injecté délivrée par l'injecteur 22, là où elle est la plus élevée. En d'autres termes, le capteur de pression 12 doit être positionné au plus proche du point d'injection de manière à ce que, lors du remplissage de l'empreinte 20, le capteur de pression 12 soit atteint par la matière lorsqu'elle a rempli entre 5% et 30% du volume de l'empreinte 20. En outre, le capteur de pression 12 ne doit pas être positionné face au point d'injection, de sorte qu'il ne mesure pas la pression de la vis d'injection

Le capteur de température 14 est situé dans l'empreinte 20 le plus loin possible du point d'injection 24, là où la matière arrive en dernier et donc là où elle est la plus froide lorsqu'elle arrive. En d'autres termes, le capteur de température 14 doit être positionné de sorte à être atteint par la matière lorsque celle-ci a rempli entre 70 et 95% du volume de l'empreinte 20. Le capteur de température 14 est positionné de sorte que la différence de volume de remplissage entre l'instant où le front de matière atteint le capteur de pression 12 et l'instant où ce même front de matière atteint le capteur de température 14, représente plus de la moitié du volume total de l'empreinte.

Le capteur de température 12 est solidaire du second châssis 6, sa position est donc fixe par rapport au châssis 6. Le capteur de pression 14 est solidaire au châssis, sa position est donc fixe par rapport au châssis 4. Cela facilite la préparation d'un moulage. Cela permet également d'assurer que les capteurs 12 et 14 ne bougent pas entre deux utilisations du moule 2, ce qui permet de garder en mémoire dans l'unité de traitement 10 les données enregistrées par les capteurs 12 et 14 et de pouvoir les comparer pour étudier l'évolution de la qualité des pièces produites par le moule 2.

Lorsque les capteurs 12 et 14 doivent être changés, par exemple lorsqu'ils sont défaillants ou trop usés, les nouveaux capteurs 12 et 14 sont calibrés, notamment en appliquant des coefficients de correction, pour corriger les différences dans les caractéristiques entre les anciens capteurs 12 et 14 et les nouveaux capteurs 12 et 14.

Lors d'un procédé de moulage d'une pièce par injection de matériau plastique dans le moule instrumenté 2, plusieurs étapes sont mises en oeuvre. Ces étapes sont décrites ci-dessous.

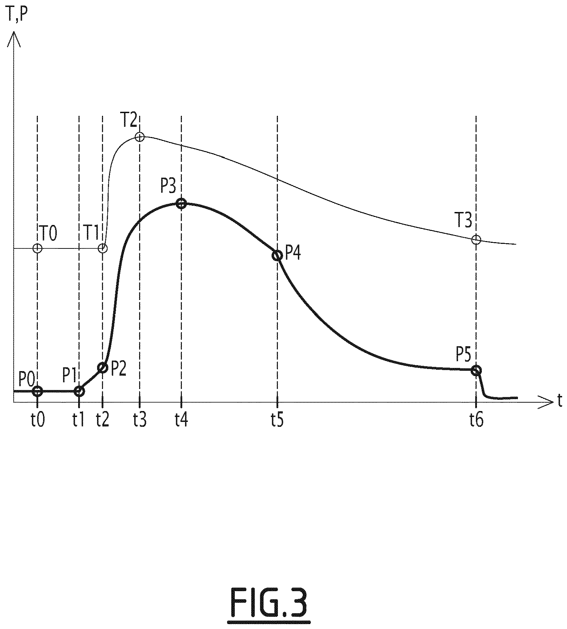

Dans une première étape 100, un cycle de moulage est initialisé en fermant le moule 2. Ensuite, dans une seconde étape 102, au cours du cycle de moulage, des grandeurs caractéristiques de la qualité de la pièce sont mesurées à l'aide des capteurs 12 et 14 intégrés au moule. Les mesures sont effectuées en temps réel, par exemple toutes les 5 millisecondes. Les grandeurs caractéristiques de la qualité de la pièce sont une température T et une pression P. Plusieurs valeurs de température T et de pression P sont mesurées au cours de l'étape 102 et ces valeurs sont stockées dans l'unité de traitement 10. Ces valeurs de température T et de pression P sont représentées en fonction du temps t, respectivement par la courbe en trait fin et par la courbe en trait épais à la figure 3.

Ensuite, dans une étape 104, le cycle de moulage se termine. Dans une étape 106 qui suit immédiatement l'étape 104 ou qui est, préférentiellement, simultanée à l'étape 102 et qui précède l'ouverture du moule, des points caractéristiques T0 à T3 et P0 à P5, visibles sur la figure 3, sont sélectionnés parmi les valeurs mesurées à l'étape 102. On note t0 à t6 les instants auxquels sont mesurées les valeurs des points caractéristiques. Les valeurs de température et de pression aux points caractéristiques sont ensuite comparées à des valeurs de calibration ou de référence T0_{c} à T3_{c} et P0_{c} à P5_{c}. Les valeurs de calibration sont obtenues à partir d'une courbe de calibration déterminée expérimentalement, dans un cas où la qualité de la pièce moulée est considérée comme satisfaisante. La courbe de calibration représente le résultat d'une campagne de tests de différents paramètres de moulage. La courbe de calibration choisie correspond aux paramètres de moulage minimisant le cisaillement du matériau injecté.

La sélection d'un nombre limité de points caractéristiques, dans l'exemple quatre points caractéristiques de température T0_{c} à T3_{c} et six points caractéristiques de pression P0_{c} à P5_{c}, permet d'avoir un procédé rapide et une quantité de données enregistrées dans l'unité de traitement 10 réduite. Le volume de l'empreinte 20 étant connu, la connaissance de la pression P et de la température T de la matière injectée permet de calculer de manière précise une viscosité dynamique de la matière injectée, qui est un indicateur de la qualité de la pièce moulée.

L'instant t0 correspond au début du cycle, et donc à l'étape 100 auquel une pression P0 et une température T0 sont mesurées. L'instant t1 correspond à un début de remplissage du moule 2, où la pression P1 est mesurée. Cet instant t1 correspond au moment où la matière injectée passe sur le capteur de pression 14 et sert de référence pour le reste des mesures. En effet, s'il y a un décalage temporel lors de l'arrivée de matière entre les mesures et la courbe de calibration, un coefficient de correction peut être appliqué aux différents instants t0 à t6. L'instant t1 est celui à partir duquel la pression mesurée par le capteur 12 commence à augmenter. L'instant t2 correspond à la fin du remplissage du moule où la pressions P2 et la température T1 sont mesurées. A partir de t2, la température augmente entre T1 et T2. C'est cette augmentation qui permet de déterminer l'instant t2. L'instant t3 correspond à l'instant où la température dans le moule est maximale, ici c'est la température T2 qui est mesurée. L'instant t4 correspond à un point de pression maximale, où la pression P3 est mesurée. L'instant t5 correspond à un instant de « gel de porte » à partir duquel la matière à l'entrée de l'empreinte 20, c'est-à-dire au point d'injection 24, se fige. C'est la fin d'application d'une pression par l'injecteur 22. Pour ce point, une pression P4 est prédéfinie et c'est l'instant t5 qui est mesuré. L'instant t6 correspond à la fin du cycle et donc à l'ouverture du moule 2 à l'étape 104. A cette étape, on mesure la pression P5 et la température T3.

De manière générale, les points caractéristiques T0 à T3 et P0 à P5, qui sont des points remarquables de la courbe, permettent de déterminer les instants t1 à t6.

La comparaison des points caractéristiques aux valeurs de calibration est effectuée en mettant en œuvre les étapes décrites ci-après, qui ont lieu après l'étape 106 ou, préférentiellement, en parallèle des étapes 102 et 106.

Tout d'abord, dans une étape 108, un compteur de valeurs non conformes Cpt_nc est initialisé à zéro, ainsi qu'un indice de température i qui est également initié à zéro. Dans une étape 110, l'indice de température i est comparé à une valeur maximale iₘₐₓ de l'indice de température. Dans l'exemple des figures, cette valeur maximale iₘₐₓ d'indice de température est égale à 3. Si l'indice de température i est inférieur ou égal à l'indice de température maximal iₘₐₓ , alors dans une étape 112, une température Ti est comparée à une température de calibration Ti_{c} et, si la valeur absolue de la différence entre les deux est supérieure à une valeur d'un intervalle de tolérance ATₘₐₓ prédéfini, alors le compteur Cpt_nc est incrémenté de 1 dans une étape 114. Puis, dans une étape 116, l'indice de température i est incrémenté de 1. Si, dans l'étape 112, la différence entre la température Ti mesurée et la température Ti_{c} de calibration est inférieur à l'intervalle de tolérance autorisé ΔT_{Max}, alors l'étape 116 est effectuée directement après l'étape 112. Suite à l'étape 116, l'ensemble des étapes 110 à 116 est de nouveau mis en œuvre jusqu'à ce que l'indice de température i soit strictement supérieur à l'indice de température maximal iₘₐₓ. Suite à l'étape 106 et de préférence en parallèle à l'étape 108, dans une étape 118, un indice j de pression est initialisé à zéro. Puis, dans une étape 120, l'indice de pression j est comparé à une valeur jₘₐₓ d'indice de pression maximale qui, dans l'exemple de la figure 3, est égal à 5. Puis, dans une étape 121, l'indice de pression j est comparé à une valeur d'indice particulière jₚₐᵣₜ. Cette valeur d'indice particulière est, dans l'exemple des figures, égale à 4 et correspond à l'instant de « gel de porte ». Si la valeur de l'indice de pression j est différente de la valeur particulière jₚₐᵣₜ, alors une étape 122 est mise en œuvre. Dans cette étape 122, la pression mesurée Pj est comparée à une pression de calibration ou de référence Pj_{c}. Si une valeur absolue d'une différence entre la pression mesurée Pⱼ et la pression de calibration Pj_{c} est strictement supérieure à un intervalle de tolérance APₘₐₓ, alors le compteur de points non conformes Cpt_nc est incrémenté de un dans une étape 124. Ensuite, une étape 126, le compteur de pression j est incrémenté de un. Cette étape 126 est effectuée directement après l'étape 122 si la valeur absolue de la différence entre la pression mesurée Pⱼ et la pression de référence Pj_{c} est inférieure ou égale à l'intervalle de tolérance ΔP_{Max}. A l'issue de l'étape 126, l'ensemble des étapes 120 à 126 est de nouveau mis en œuvre jusqu'à ce que l'indice de pression j soit strictement supérieur à l'indice de pression maximale jₘₐₓ.

Si, à l'étape 121, le compteur de pression j est égal la valeur particulière jₚₐᵣₜ, alors, dans une étape 127, l'instant tj associé à la valeur de pression Pj est comparé à un instant tj_{c} de calibration ou de référence et, si une valeur absolue d'une différence entre ces deux valeurs est strictement supérieure à un intervalle de tolérance Atₘₐₓ prédéterminé, alors le compteur de points non conformes Cpt_nc est incrémenté de un dans une étape 128, suite à quoi l'étape 126 est mise en œuvre. Si la valeur calculée à l'étape 127 est inférieure ou égale à l'intervalle de tolérance Atₘₐₓ, alors l'étape 126 est directement effectuée sans passer par l'étape 127.

Les intervalles de tolérance APₘₐₓ, ATₘₐₓ et Atₘₐₓsont centrés sur les valeurs de calibration.

Lorsque, à l'étape 110, l'indice de température i est supérieur à la valeur maximale iₘₐₓ de l'indice de température et que, à l'étape 120, l'indice de pression j est supérieur à la valeur maximale jₘₐₓ de l'indice de pression, une étape 129 est mise en œuvre, dans laquelle les résultats obtenus pour la température T et pour la pression P sont mis en commun. Dans une étape 130, la valeur finale du compteur de points non conformes Cpt_nc, dans lequel le nombre de points mesurés hors des intervalles de tolérance APₘₐₓ, ATₘₐₓ et Atₘₐₓ est stocké, est comparée à une valeur seuil S. Si, dans l'étape 130, la valeur du compteur de points non conformes Cpt_nc est strictement supérieure à la valeur seuil S, alors, dans une étape 132, la pièce est déclarée non conforme. Si, à l'étape 130, le compteur de points non conformes est inférieur ou égal à la valeur seuil S, alors la pièce est déclarée conforme dans une étape 134.

De façon générale, les étapes 104 à 134 sont mises en œuvre avant ouverture du moule au terme de l'opération de moulage. Ceci permet de savoir, dès avant l'ouverture du moule, si la pièce produite est conforme ou non et comment elle doit ensuite être traitée. Les calculs des étapes 108 à 130 sont effectués au cours du cycle de moulage, au fur et à mesure de celui-ci.

L'opérateur peut, en fonction des données collectées, choisir de sélectionner tous les points caractéristiques T0 à T3 et P0 à P5 ou de n'en garder qu'une partie. En d'autres termes, l'opérateur peut utiliser tout ou partie des critères mentionnés ci-dessus pour déterminer si une pièce est conforme ou non. Dans le cas où seule une partie de ces critères est utilisée, la valeur seuil S est adaptée.

Les intervalles de tolérance ΔPₘₐₓ, ΔTₘₐₓ et Δtₘₓ sont déterminés, lorsqu'aucune opération de moulage n'a été effectuée dans le moule 2, avec des seuils d'écarts fixes ne dépendant pas de l'installation 1 ou du moule 2.

Lorsque plusieurs cycles de moulages ont été effectués, les données mesurées pendant les cycles de moulage permettant l'obtention de pièces conformes sont utilisées et les valeurs de références T0_{C} à T3_{C}, P0_{C} à P5_{C}, ainsi que les intervalles de tolérance APₘₐₓ, ATₘₐₓ et Δtₘₓ sont déterminés en utilisant les données statistiques acquises pendant ces cycles. Par exemple, les valeurs de référence T0_{X} à T3_{C} et P0_{C} à P5_{C} sont fixées à la moyenne des valeurs des points caractéristiques T0 à T6 et P0 à P6 et la durée entre les instants t0_{C} et t5_{C} est fixée à la moyenne de cette durée pour les mesures effectuées précédemment. Les intervalles de tolérance ΔPₘₐₓ, ΔTₘₐₓ et Δtₘₐₓ sont fixés à trois fois l'écart type des valeurs précédemment mesurées.

A l'issue du procédé décrit ci-dessus, dans une étape supplémentaire, les points caractéristiques T0 à T3 et P0 à P5, les valeurs de référence Pi_{C}, Tj_{C} et tj_{C}, les différences calculées et la valeur du compteur Cpt_nc sont stockés dans la mémoire de l'unité de traitement 10. Cela permet de générer un historique des pièces moulées et de déterminer quel moule 2 et quelle machine fabrique des pièces de qualité ou non.

En variante, les capteurs de pression 12 et de température 14 peuvent se trouver tous dans le premier châssis 4 ou tous dans le second châssis 6.

Selon une autre variante, le capteur de pression 14 est intégré au premier châssis 4 et le capteur de température 14 est intégré au second châssis 6.

En variante, plusieurs points d'injection peuvent être prévus dans le moule 2.

En variante, le nombre d'empreintes 20 présentes dans le moule 2 peut varier. Par exemple, le moule 2 peut comprendre trois empreintes. Dans ce cas, le moule 2 comprend au moins un capteur de pression 12 et un capteur de température 14 et au maximum trois capteurs de pression 12 et trois capteurs de température 14, chaque empreinte 20 étant munie au maximum d'un capteur de pression 12 et d'un capteur de température 14. Par exemple, dans ce cas, le moule 2 peut comprendre un capteur de pression 12 et trois capteurs de température 14.

En général, le moule 2 comprend au moins un capteur de pression 12 et un capteur de température 14, la ou chaque empreinte 20 étant reliée à, au maximum, un capteur de pression 12 et un capteur de température 14. Le nombre de capteurs de pressions 12 présents dans le moule et/ou le nombre de capteurs de température 14 présents dans le moule peut être inférieur au nombre d'empreintes 20, mais toujours supérieur ou égal à un. Au moins une empreinte 20 du moule 2 est équipée avec un capteur de pression 12 et un capteur de température 14

Selon une autre variante, le nombre de points caractéristiques et de valeurs de calibration est différent. Par exemple, trois instants sont considérés et deux températures et trois pressions sont mesurées et comparées aux valeurs de calibration.

En variante, les étapes 118 à 128 peuvent être effectuées avant les étapes 108 à 116. Dans ce cas, le compteur Cpt_nc est initialisé à zéro lors de l'étape 118 au lieu d'être initialisé lors de l'étape 110.

Selon une autre variante, les étapes 118 à 128 peuvent être effectuées en parallèle des étapes 110 à 116. Dans ce cas, un deuxième compteur est initialisé à zéro lors de l'étape 118 et les deux compteurs sont additionnés dans l'étape 129 pour que leur somme soit comparée à la valeur seuil S dans l'étape 130.

En variante, un troisième compteur d'instant peut être initialisé et un ensemble d'étapes similaires aux étapes 110 à 126 ou 120 à 126 peut être implémenté pour comparer toutes les valeurs des instants t0 à t6 à des valeurs de référence. Dans ce cas, les étapes 121, 127 et 128 ne sont pas implémentées. Ainsi, chaque point caractéristique T0 à T3 et P0 à P5 est comparé à sa valeur de calibration T0_{C} à T3_{C} et P0_{C} à P5_{C} et les instants auxquels ces valeurs sont mesurées ou calculées sont également comparés à des valeurs de calibration t0_{C} à t5_{C}.

Selon une autre variante, d'autres grandeurs peuvent être calculées, par exemple des intégrales de pression et/ou de température entre différents instants, par exemple entre t5 et t6 ou entre t4 et t6. Des différences de températures, par exemple entre T3 et T0 et de pression, par exemple entre P4 et P2, peuvent également être calculées et utilisées comme indicateurs de qualité de la pièce moulée.

En variante, la mémoire peut être distincte de l'unité de traitement 10. Dans tous les cas, elle appartient au moule 2.

En pratique, la fréquence d'échantillonnage est ajustée en fonction de la durée d'injection. La fréquence d'échantillonnage peut être comprise entre 1ms et 1 seconde.

En variante, les étapes 106 à 129 sont effectuées tout au long du cycle de moulage, pendant l'acquisition des données à l'étape 102.

Le mode de réalisation et les variantes ci-dessus peuvent être combinés entre eux pour générer de nouveaux modes de réalisation de l'invention.

## Revendications

1. Procédé de moulage d'une pièce par injection plastique dans un moule (2), **caractérisé en ce qu'**il comprend au moins des étapes consistant à :
• a) initialiser (100) un cycle de moulage ;
• b) mesurer (102), ou calculer au cours du cycle de moulage, des grandeurs caractéristiques de la qualité de la pièce à l'aide de capteurs (12, 14) intégrés au moule ;
• c) comparer les grandeurs caractéristiques mesurées ou calculées à l'étape b) à des valeurs de référence ; et
• d) en fonction de la comparaison effectuée à l'étape c), déclarer la pièce conforme (134) ou non conforme (132).

2. Procédé selon la revendication 1, **caractérisé en ce que** l'étape d) comprend des sous-étapes consistant à :
• e) compter (114, 124, 128) le nombre de grandeurs caractéristiques qui sont hors d'un intervalle de tolérance (ΔPₘₐₓ, ΔTₘₐₓ, Δtₘₐₓ) centré sur des valeurs de référence et stocker cette valeur dans un compteur (Cpt_nc) ;
• f) comparer (130) le compteur à une valeur seuil (S) ;
• g) si le compteur est inférieur ou égal à la valeur seuil, déclarer (134) la pièce conforme ; et
• h) si le compteur est strictement supérieur à la valeur seuil, déclarer (132) la pièce non conforme.

3. Procédé selon la revendication 2, **caractérisé en ce que** l'étape e) comprend des routines consistant à :
• i) (106) sélectionner ou calculer des grandeurs caractéristiques (T0, T1, T2, T3, P0, P1, P2, P3, P4, P5) parmi les valeurs mesurées ou calculées à l'étape b) (102) ;
• j) initialiser (108) le compteur (Cpt_nc) ;
• k) comparer (112, 122, 127) au moins un des points caractéristiques mesurés ou calculés (Pi, Ti, ti) à une valeur de référence (T0_{c}, T1_{c}, T2_{c}, T3_{c}, P0_{c}, P1_{c}, P2_{c}, P3_{c}, P4_{c}, P5_{c}) correspondante ; et
• l) pour chaque point caractéristique, si la différence calculée à la routine k) est supérieure à un intervalle de tolérance prédéfini APₘₐₓ, ΔTₘₐₓ, Δtₘₐₓ), incrémenter (114, 124, 128) le compteur de un.

4. Procédé selon la revendication 3, **caractérisé en ce que**, après l'étape I), dans une étape m) les points caractéristiques (T0, T1, T2, T3, P0, P1, P2, P3, P4, P5), les valeurs de références (T0_{c}, T1_{c}, T2_{c}, T3_{c}, P0_{c}, P1_{c}, P2_{c}, P3_{c}, P4_{c}, P5_{c}), les différences calculées et la valeur du compteur (Cpt_nc) sont stockées dans une mémoire appartenant au moule (2).

5. Procédé selon l'une quelconque des revendications 3 ou 4, **caractérisé en ce que** les grandeurs caractéristiques comprennent des pressions (P0, P1, P2, P3, P4, P5) et des températures (T0, T1, T2, T3) ou des résultats de calculs, notamment des intégrales de valeurs.

6. Moule instrumenté (2) destiné à mettre en œuvre le procédé selon l'une quelconque des revendications précédentes et comprenant des capteurs (12, 14), caractérisé en ce les capteurs (12, 14) sont solidaires d'au moins un châssis (4,6) du moule.

7. Moule instrumenté (2) selon la revendication 6, **caractérisé en ce que** le moule comprend au moins un capteur de pression (12) et un capteur de température (14) et **en ce qu'**au moins une empreinte est équipée d'un capteur de pression (12) et d'un capteur de température (14).

8. Moule instrumenté (2) selon la revendication 7, **caractérisé en ce qu'**il comprend au moins une empreinte (20), chaque empreinte comprenant au maximum un capteur de température (14) et un capteur de pression (12).

9. Moule instrumenté (2) selon la revendication 8, **caractérisé en ce que** chaque empreinte comprend un point d'injection, **en ce que** chaque capteur de pression (12) est situé dans l'empreinte (20) correspondante, au plus proche du point d'injection et **en ce que** chaque capteur de température (14) est situé dans l'empreinte correspondante le plus loin possible du point d'injection (24).
